# EUROPEAN PATENT APPLICATION

(11) **EP 4 141 756 A1**
(43) Date of publication of application: **01.03.2023**
(21) Application number: 22191113.4
(22) Date of filing: 19.08.2022
(51) Int. Cl.: G06Q 10/00, G06Q 10/06

(54) **ADMINISTRATION STRATEGY AND PROVIDING METHOD THEREOF**

(30) Priority: 24.08.2021 KR 20210111309
(71) Applicant: Withplus, Gyeonggi-do 14055 (KR)
(72) Inventor: LEE, Kwang Pyo, 16047 Uiwang-si, Gyeonggi-do (KR); RYU, Choong Yeol, 14923 Siheung-si, Gyeonggi-do (KR); KIM, Chang Yup, 12012 Namyangju-si, Gyeonggi-do (KR); KIM, Seok Yun, 16028 Uiwang-si, Gyeonggi-do (KR)
(74) Representative: Isarpatent

(57) **Abstract**

Disclosed is a content providing apparatus including a setting management unit configured to assign at least one or more user terminals participating in an administration strategy simulation as a group member, and give a virtual budget amount, a deadline, and a public sentiment score to an assigned group; a data generation unit configured to include a neuron network trained using at least one data of a result of policy enforcement of public institution, public opinion, or a real issue and generate learning content and a first policy decision-making corresponding to the learning content through the trained neuron network; an administration strategy evaluation unit configured to calculate an evaluation score based on a second policy decision-making input by a user of the user terminal and the first policy decision-making inferred by the data generation unit and increase or decrease the budget amount and the public sentiment score based on the calculated evaluation score; and a simulation execution unit configured to, in a first turn, provide first learning content to the user terminal, transmit the budget amount and the public sentiment score changed through the administration strategy evaluation unit to the user terminal after receiving the second policy decision-making, and provide second learning content corresponding to a second turn.

## Description

### CROSS-REFERENCE TO RELATED APPLICATION

This application claims priority to Korean Patent Application No. 10-2021-0111309 filed on August 24, 2021, and all the benefits accruing therefrom under 35 U.S.C. § 119, the contents of which are incorporated by reference in their entirety.

### BACKGROUND

The present disclosure relates to relate to a content providing method, apparatus and system for simulating an administration strategy to improve an administrative ability of participants belonging to a public institution.

Conventionally, simulation methods for educating management strategies have been developed in various ways. However, there is a lack of a simulation education method for a group of administrators who establish and implement an administration policy of the public institution.

With the recent emergence of the MZ generation who want to actively participate in the administration policy of public institution beyond their interest in the administration policy, a policy maker and policy practitioner need more professional and active response capabilities. Social change becoming more complex and diverse require the administrative group to have the capability to implement flexible policies, solve various issues that arise in the process of policy implementation, and draw social consensus. Accordingly, it is necessary to provide education for the differentiated and efficient strategy establishment and policy progress in an administrative domain of public institution.

As can be seen from the prior art below, the prior art discloses the technology necessary to establish a strategy or education necessary for general simple administration. Specifically, the following prior art literature only discloses a system that provides applications necessary for educational administration, such as information, assets, accounting, equipment, and salary necessary for academic management, but does not disclose a technology that provides educational content for the policy establishment and implement process by reflecting various issues and social changes as big data.

### [Prior art Literature]

### [Patent Literature]

PTL 1: Korean Unexamined Patent Application Publication No. 10-2002-0020015 A

### SUMMARY

The present disclosure provides a content providing apparatus for simulating an administration strategy and providing method thereof with which efficient budget execution and professional administration policy progress can be experienced by collecting a real issue, public opinion, and a result of policy enforcement of actual public institution that can be collected in various ways and providing learning content generated based on these data.

In accordance with an exemplary embodiment of the present invention, there is provided a a content providing apparatus includes: a setting management unit configured to assign at least one or more user terminals participating in an administration strategy simulation as a group member, and give a virtual budget amount, a deadline, and a public sentiment score to an assigned group; a data generation unit configured to include a neuron network trained using at least one data of a result of policy enforcement of public institution, public opinion, or a real issue and generate learning content and a first policy decision-making corresponding to the learning content through the trained neuron network; an administration strategy evaluation unit configured to calculate an evaluation score based on a second policy decision-making input by a user of the user terminal and the first policy decision-making inferred by the data generation unit and increase or decrease the budget amount and the public sentiment score based on the calculated evaluation score; and a simulation execution unit configured to, in a first turn, provide first learning content to the user terminal, transmit the budget amount and the public sentiment score changed through the administration strategy evaluation unit to the user terminal after receiving the second policy decision-making, and provide second learning content corresponding to a second turn.

The data generation unit may be configured to collect the result of policy enforcement of public institution, the public opinion, or the real issue, which become a hot topic in real time through the Internet network, and train the neuron network with the data collected as an input value even while the turn is in progress.

The simulation execution unit may be configured to arrange a plurality of pieces of learning content generated by the data generation unit for each turn based on a preset rule and a learning goal of administration strategy.

The administration strategy evaluation unit may be configured to generate a feedback comment reflecting the data collected by the data generation unit while calculating an evaluation score according to the second policy decision-making.

The administration strategy evaluation unit may be configured to generate an administration evaluation history in which the second policy decision-making input by the user terminal for each turn and the feedback comment, and the simulation execution unit may provide the administration evaluation history to the user terminal in the last turn.

The apparatus in accordance with the exemplary embodiment may be controlled by a computer program stored in a medium so as to execute a method of any one of the methods described above in combination with hardware

### BRIEF DESCRIPTION OF THE DRAWINGS

Exemplary embodiments can be understood in more detail from the following description taken in conjunction with the accompanying drawings, in which:
FIG. 1 is a diagram for illustrating a content providing apparatus and an entire system including the same in accordance with exemplary embodiment of the present invention;
FIG. 2 is a control block diagram for illustrating a detailed configuration of the content providing apparatus in accordance with an exemplary embodiment;
FIG. 3 is a flowchart of a content providing method in accordance with another exemplary embodiment; and
FIGS. 4 to 6 are diagrams for illustrating an example of an administration strategy simulation provided by the content providing apparatus to a user terminal in accordance with still another exemplary embodiment.

### DETAILED DESCRIPTION OF EMBODIMENTS

Hereinafter, specific embodiments will be described in detail with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art.

In the figures, the dimensions of layers and regions are exaggerated for clarity of illustration. Like reference numerals refer to like elements throughout. It will also be understood that when a layer, a film, a region or a plate is referred to as being 'on' another one, it can be directly on the other one, or one or more intervening layers, films, regions or plates may also be present. Further, it will be understood that when a layer, a film, a region or a plate is referred to as being 'under' another one, it can be directly under the other one, and one or more intervening layers, films, regions or plates may also be present. In addition, it will also be understood that when a layer, a film, a region or a plate is referred to as being 'between' two layers, films, regions or plates, it can be the only layer, film, region or plate between the two layers, films, regions or plates, or one or more intervening layers, films, regions or plates may also be present.

Hereinafter, embodiments will be described in detail with reference to the accompanying drawings. However, since various modifications may be made to the embodiments, the scope of the patent application is not limited or restricted by these embodiments. It should be understood that all modifications, equivalents and substitutes for the embodiments are included in the scope of the rights.

Specific structural or functional descriptions of the embodiments are disclosed for purposes of illustration only, and may be changed and implemented in various forms. Accordingly, the embodiments are not limited to a specific disclosure form, and the scope of the present specification includes modifications, equivalents, or substitutes included in the technical spirit.

Terms such as first or second may be used to describe various components, but these terms should be interpreted only for the purpose of distinguishing one component from another component. For example, a first component may be referred to as a second component, and similarly, the second component may also be referred to as the first component.

When a component is referred to as being "coupled to" another component, it may be directly coupled or connected to the other component, but it should be understood that another component may exist in between.

The terms used in the embodiments are used for description purposes only, and should not be interpreted as limiting. The singular expression includes the plural expression unless the context clearly dictates otherwise. In the present specification, it should be understood that terms such as "comprise" or "include" are intended to designate that a feature, number, step, operation, component, part, or combination thereof described in the specification exists, but does not preclude the possibility of the presence or addition of one or more other features or numbers, steps, operations, components, parts, or combinations thereof.

Unless otherwise defined, all terms used herein, including technical or scientific terms, have the same meaning as commonly understood by one of ordinary skill in the art to which the embodiment belongs. Terms such as those defined in commonly used dictionaries should be interpreted as having a meaning consistent with the meaning in the context of the related art, and should not be interpreted in an ideal or excessively formal meaning unless explicitly defined in the present application.

In addition, in describing the embodiments with reference to the accompanying drawings, the same components are given the same reference numerals regardless of the signs on the drawings, and redundant descriptions thereof will be omitted. In describing the embodiments, when it is determined that a detailed description of a related known technology may unnecessarily obscure the gist of embodiments, a detailed description thereof will be omitted.

The embodiments may be implemented in various types of products, such as a personal computer, a laptop computer, a tablet computer, a smart phone, a television, a smart home appliance, an intelligent vehicle, a kiosk, and a wearable device.

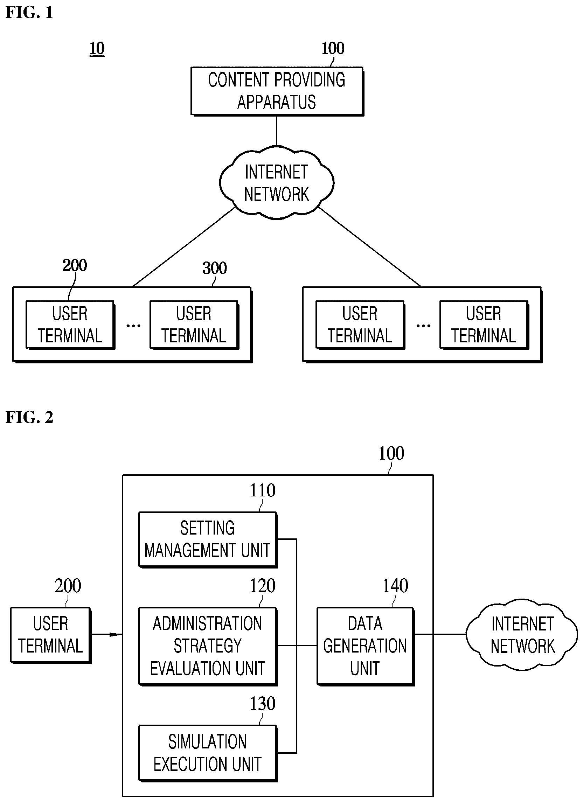

FIG. 1 is a diagram for illustrating a content providing apparatus and an entire system including the same in accordance with exemplary embodiment of the present invention.

First, referring to FIG. 1, an entire system 10 may include a content providing apparatus 100 connected to an Internet network, and a user terminal 200 that exchanges data with the content providing apparatus 100 through the Internet network.

Specifically, the content providing apparatus 100 provides an administration strategy simulation to the user terminal 200. The content providing apparatus 100 collects data of at least one of a result of policy enforcement of public institution, public opinion, or a real issue that occurs in real time in reality through the Internet network, and generates learning content based on this data. Here, the learning content includes various types of content by which a quiz and problem related to various administrative strategies reflecting the data described above and other administration strategies can be experienced.

The content providing apparatus 100 generates and stores a solution corresponding to the learning content, that is, policy decision-making. The content providing apparatus 100 generates a goal based scenario (GBS) based on the generated learning content and policy decision-making, and generates an administration strategy simulation game through the generated GBS and various design UIs. The content providing apparatus 100 provides the administration strategy simulation game to the user terminal 200 so that the learner (hereinafter referred to as the user) may acquire and learn a policy implementation capability necessary for public administration, such as an administration policy goal, resource acquisition, policy issue analysis, internal and external cooperation methods, or leadership.

Meanwhile, the administration strategy simulation provided by the content providing apparatus 100 is a term not specifically disclosed in the prior art. However, similar to the management strategy simulation, the administration strategy simulation is a type of game in which a fixed budget and deadline are set and makes a turn progress by spending an amount up to a target amount and by which the capability required for administration implementation can be developed, and the administration strategy simulation is first proposed in this specification.

A plurality of user terminals 200 may consist of one group 300, and a plurality of groups 300 and at least one content providing apparatus 100 may be gathered to form the system 10.

As described above, the content providing apparatus apparatus 100 may provide the administration strategy simulation game to the plurality of user terminals 200 using the Internet network. For example, the user terminal 200 may be connected to the content providing apparatus 100 through a QR code distributed by the content providing apparatus 100.

The content providing apparatus 100 allows a plurality of groups 300 and 301 composed of the plurality of user terminals 200 to compete with each other to experience learning content provided by the content providing apparatus 100. The plurality of groups 300 and 301 may virtually perform a series of activities related to the administration policy, and check the result. In addition, even within one group 300, the group members are given a rank suitable for an administrative position such as a policy maker and a policy practitioner, so that different pieces of learning content are provided to the group members and, an individual evaluation score and a feedback comment are provided for each user terminal 200. A detailed description thereof will be described later with reference to other drawings below.

Meanwhile, a plurality of users access the content providing apparatus 100 by using the user terminal 200. For the content providing apparatus 100, a broadcast method of transmitting learning content generated through a pre-trained neuron network to all users who have accessed the learning content is applied. In addition, the content providing apparatus 100 may update the learning content based on an issue related to the current public policy that is collected in real time even while the administration strategy simulation is in progress, and updated learning content may be provided to the user in the next turn.

The user terminal 200 allows a plurality of users to respectively experience a virtual content providing apparatus by accessing the content providing apparatus 100 through an application or the web. The user terminal 200 can be a tablet PC, PDA, notebook, cellular phone, PCS phone, and smart phone, and download and use an application dedicated to the content providing apparatus, or a web address may be provided to the user terminal 200 through the QR code distributed from the content providing apparatus 100.

FIG. 2 is a control block diagram for illustrating a detailed configuration of the content providing apparatus in accordance with an exemplary embodiment.

Referring to FIG. 2, the content providing apparatus 100 includes a setting management unit 110 that prepares all matters necessary to execute the administration strategy simulation, a data generation unit 140 that generates learning content provided to participants in the administration strategy simulation and generates policy decision-making (hereinafter referred to as first policy decision-making) corresponding to a correct answer to the learning content, an administration strategy evaluation unit 120 that evaluates the user by comparing the first policy decision-making with the policy decision-making input (hereinafter referred to as second policy decision-making) by the user of the user terminal 200, and a simulation execution unit 130 makes the game progress while providing the learning content generated for each of a plurality of turns included in an administration policy simulation process, and provides an evaluation score evaluated by the administration strategy evaluation unit 120.

First, the setting management unit 110 allows a user to login, participate the game, and assigns the group for the user terminal 200, and gives a virtual budget amount and public sentiment points to an assigned group.

Specifically, the setting management unit 110 may give a personal ID and password to each user based on personal information input by the user from the user terminal 200, and perform user authentication using the personal ID and password. For example, the user may input personal information including a public institution name, job, name, position, personal ID, and password through the user terminal 200, and the setting management unit 110 may allow membership registration for each user based on the input personal information. When membership registration is completed, the user inputs the personal ID and password, the public institution, and a group number through the user terminal 200. Thereafter, the setting management unit 110 performs user authentication using the input personal ID and password, and sets and stores the public institution and group number of the corresponding user.

The setting management unit 110 may set a role of the group member based on the personal information input by the user terminal 200. A general public institution is divided into an administration strategy maker and an administration strategy practitioner according to the position, and the administration strategy maker and the administration strategy practitioner performs a role suitable for each position. When assigning a group based on personal information, the setting management unit 110 may determine the role of the group member suitable for the position and job, and assign the group and the group member so that learning content suitable for the role of the group member can be provided to the user.

The setting management unit 110 assigns a plurality of participants 200 as the group members of the group 300, and provides preparations necessary for the execution of the administration strategy simulation by giving a virtual budget amount and public sentiment points to the assigned group. The general public institution is not a profit-seeking company, but an institution that measures a given budget amount, executes the budget amount, and increases public sentiment according to the policy result. Therefore, unlike the management strategy simulation, the administration strategy simulation sets a preset budget amount, deadline, and public sentiment score for the user who makes the simulation progress. To this end, the setting management unit 110 serves to set the budget amount, the deadline, and the public sentiment score corresponding to the learning content generated by the data generation unit 140 before the simulation.

When the setting management unit 110 completes the simulation setting, the simulation execution unit 130 executes the simulation by providing the learning content generated by the data generation unit 140 to the user terminal 200. Here, the data generation unit 140 may prepare various pieces of learning content by training before or during the simulation execution.

Specifically, the data generation unit 140 generates learning content by being trained using) at least one data of the result of policy enforcement of public institution, public opinion, or real issue. Here, the the result of policy enforcement of public institution, public opinion, or real issue collected by the data generation unit 140 mean big data such as a real-time administration-related issue, social issue, economic issue, and diplomatic issue collected from the Internet network. The data generation unit 140 includes an artificial neural network including a neuron network in order to learn various big data. The neuron network included in the data generation unit 140 converts the the result of policy enforcement of public institution, public opinion, or real issue into data, and outputs related learning content and the first policy decision-making corresponding thereto as an input value. In addition, the neuron network can make circular learning progress so that the output learning content and policy decision-making can become content that reflects reality and can enhance the user's capabilities.

In one example, the neuron network refers to a convolution neural network (CNN) that learns images or images as well as a recurrent neural network (RNN) which is effective for a sequence tasks that interprets and classifies text, and an artificial neural network that learns various data as input values by combining the CNN and RNN. Here, the neuron network may be composed of a multi-layer perceptron, and various issues and images collected from the Internet network may be used as input values of the perceptron. On the other hand, the artificial neural network used by the disclosed content providing apparatus 100 may not necessarily be the CNN, and may include various embodiments such as a fully convolution model (FCN), which is a modification of the CNN. In addition, the content providing apparatus 100 may generate the learning content and the first policy decision-making through an artificial neural network including a neural network structure other than a perceptron necessarily including a feature value or a weight.

As an example, as learning content generated by the data generating unit 140, it is possible to generate learning content, which collects real issues that damage to crops caused by typhoons in summer has spread, and asks questions about the rapid rise in vegetable prices and appropriate solutions due to damage to crops, through the neural network. The data generation unit 140 may generate a policy, which is actually performed by a public institution and has been evaluated by public opinion that the policy is excellent, as a first policy decision-making.

Meanwhile, the data generation unit 140 may generate learning content in advance before the administration strategy simulation is executed, as well as generate learning content based on the data collected in real time even while the administration strategy simulation is in progress. That is, the data generation unit 140 may collect the result of policy enforcement of public institution, public opinion, or real issue that become hot topics in real time through the Internet network, train the neuron network using the data collected as an input value even while the turn is in progress, and apply the learning content inferred through the trained neuron network or the modified first policy decision-making to the administration strategy simulation which is in progress.

The administration strategy evaluation unit 120 compares an answer that the user of the user terminal 200 responds according to the learning content, that is, the second policy decision-making with the first policy decision-making generated by the data generator 140 in response to the provided learning content. The administration strategy evaluation unit 120 calculates an evaluation score based on the comparison result, and increases or decreases the budget amount and public sentiment score set by the setting management unit 110 based on the calculated evaluation score.

For example, the data generation unit 140 may generate a plurality of pre-prepared first policy decision-makings while generating the learning content. The first policy decision-making created in plurality may be composed of different policies implemented by the public institutions in the past for similar real issues. The administration strategy evaluation unit 120 may differentiate and quantify the plurality of first policy decision-makings based on the evaluation of public opinion for each policy. The data generation unit 140 may select the one most similar to the second policy decision-making among the plurality of first policy decision-makings, and calculate a numerical value of the first policy decision-making selected as similar to the second policy decision-making as an evaluation score.

Meanwhile, the quantification of the administration strategy evaluation unit 120 may be a result obtained by training the the neuron network described above, and may be updated for each learning content or whenever a simulation is performed.

The administration strategy evaluation unit 120 may generate a feedback comment reflecting the data collected by the data generation unit while calculating the evaluation score according to the second policy decision-making. That is, the disclosed administration strategy evaluation unit 120 may provide a modified response based on data learned through the neural in addition to providing a simple numerical value for the user's response. Such a modified response may not only simply provide the first policy decision-making, but may be generated based on collected the real issue, public opinion, and actual result of policy enforcement of public institution, and may be updated through the neuron network.

The administration strategy evaluation unit 120 generates an administration evaluation history for the second policy decision-making input by the user terminal 200 for each turn. As described above, the administration strategy simulation includes a plurality of turns according to the deadline, and learning content arranged for each turn. The user will input the second policy decision-making each time when each turn progresses, and the administrative strategy evaluation unit 120 not only calculates the evaluation score, but also stores each second policy decision-making to configure the evaluation history. The evaluation history includes the feedback comment described above and the user may strengthen administrative capabilities through the evaluation history.

The evaluation history is provided to the group or the group member who makes the last turn progress, and is executed through the simulation execution unit 130.

The administration strategy evaluation unit 120 increases or decreases the public sentiment score and budget amount based on the calculated evaluation score. Specifically, when classifying the generated learning content, the administration strategy evaluation unit 120 may set the budget amount and public sentiment score to increase or decrease based on a policy scale or an impact on society. For example, the administration strategy evaluation unit 120 may set the budget amount to be deducted for each village-scale issue (hereinafter referred to as a first issue), regional-scale issue (hereinafter referred to as a second issue), and national-scale issue (hereinafter referred to as a third issue) and the public sentiment score differently, and generate a detailed budget amount and changes in the public sentiment score by decomposing the evaluation score into percentages for each of the plurality of first policy decision-makings.

The changed budget and public sentiment score are applied to each turn executed by the simulation execution unit 130.

The simulation execution unit 130 is in charge of a communication function that, in each turn, provides learning content to the user terminal, receives the second policy decision-making from the user terminal 200, and then provides the changed budget amount and public sentiment score through the administration strategy evaluation unit 120 to the user terminal 200.

The simulation execution unit 130 may operate based on Unity that can be executed by the administration strategy simulation, and may provide a pre-stored design user interface (UI) and provides the learning content generated by the data generation unit 140 for each of a plurality of turns along with the UI. However, an operating program of the simulation execution unit 130 is not necessarily limited to Unity. For example, the simulation execution unit 130 may provide a video UI in which a bureaucrat of the Chosun Dynasty moves from the first turn to the second turn on a horse in a virtual space provided with a plurality of turns, and when the learning content is provided in each turn, the simulation execution unit 130 may arouse attention and interest to the user with sound or other various design images.

The simulation execution unit 130 arranges a plurality of pieces of learning content generated by the data generation unit 140 for each turn based on a preset rule and a learning goal of administration strategy. After storing the learning content and the first policy decision-making generated by the data generation unit 140, the learning content may be appropriately arranged for each turn in the administration strategy simulation. The administration strategy simulation according to an example includes a plurality of preset turns (times), and the number of turns is related to the deadline generated by the setting management unit 110. The simulation execution unit 130 may arrange the generated learning content for each turn.

In addition, in order to prevent uniform administration strategy simulation provision, the simulation execution unit 130 may vary the learning content arranged for each turn even if the same learning content is provided. The learning content arranged by the simulation execution unit 130 may be randomly executed by a random number table, but the learning content may be arranged by training the neural network based on the feedback of a learner who has already experienced the administration strategy simulation.

Meanwhile, the content providing apparatus 100 according to an embodiment may be provided with a processor (not illustrated) and a memory (not illustrated). The processor may configure each of the setting management unit 110, the administration strategy evaluation unit 120, the simulation execution unit 130 and the data generation unit 140 described above through FIG. 2, or may be provided as a function separately performed by a program on one processor. In addition, the memory may store the collected result of policy enforcement of public institution, public opinion, or real issue, as well as the program and the neuron network necessary for the operation of each configuration. The memory may provide data and programs according to the needs of each configuration, and the memory may be provided without being limited to a volatile memory or non-volatile memory.

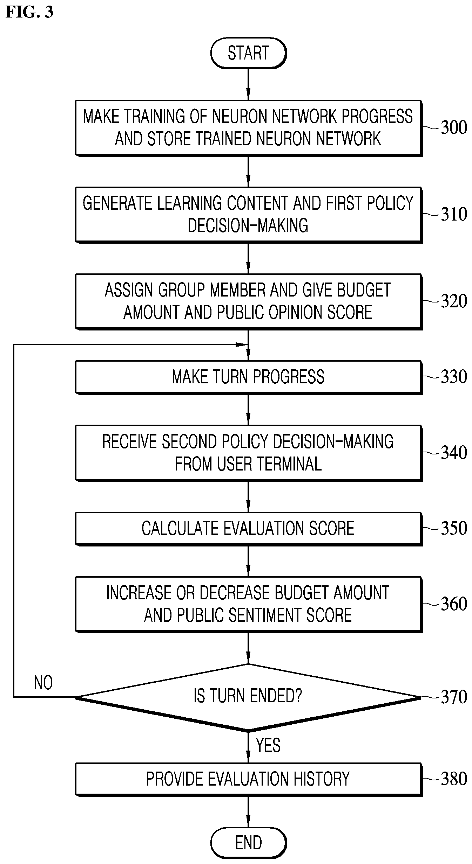

FIG. 3 is a flowchart of a content providing method in accordance with another exemplary embodiment.

The content providing apparatus 100 makes training of the neuron network progress, and stores the trained neuron network (300).

As described above in FIG. 2, the content providing apparatus 100 needs to generate learning content in advance before executing the administration strategy simulation. In order to generate the learning content, the content providing apparatus 100 trains the neural network in advance by using the result of policy enforcement of public institution, public opinion, or real issue as an input value, and stores the trained neural network.

The content providing apparatus 100 generates the learning content and the first policy decision-making (310).

The learning content and the first policy decision-making are generated by the neural network trained in step 300, and are arranged for each turn based on the preset rule and the learning goal of administration strategy.

The content providing apparatus 100 assigns the group member and gives the budget amount and the public opinion score (320).

As an example, the content providing apparatus 100 assigns a group to a plurality of users logging in according to an application of the user terminal 200 as the group members, and gives the budget money and the public sentiment score to each group as default setting values. As described above in FIG. 2, the content providing apparatus 100 may give the budget amount and the public opinion score to one group, and may give various budget amounts, public opinion scores, and deadlines according to an administration strategy intended to educate.

After assigning the group member to at least one group, if the budget amount, public sentiment score, etc. are assigned, the content providing apparatus 100 makes a turn progress (330).

The content providing apparatus 100 outputs a UI set for each turn whenever the turn is made to progress, and displays the learning content assigned to each turn.

The content providing apparatus 100 receives the second policy decision-making from the user terminal 200 (340).

The user of the user terminal 200 will make education progress according to the learning content. For example, when a quiz is provided, the user inputs the correct answer corresponding thereto, that is, the second policy decision-making. The input second policy decision-making is transmitted to the content providing apparatus 100 through the user terminal 200.

The content providing apparatus 100 calculates the evaluation score (350), and increases or decreases the budget amount and public sentiment score based on the evaluation score (360).

The content providing apparatus 100 may calculate the evaluation score by comparing the second policy decision-making received from the user terminal 200 with the first policy decision-making generated in advance. The content providing apparatus 100 increases or decreases the budget and the public sentiment score based on the calculated evaluation score. For example, if the second policy decision-making is very similar to the pre-generated first policy decision-making and thus a high evaluation score is calculated, the public sentiment score may increase even though the budget amount is deducted.

The content providing apparatus 100 determines whether or not the turn is ended (370).

If it is not the last turn, the content providing apparatus 100 returns to 330 to make the next turn progress, and steps 340 to 360 are performed again. If it is the last turn, the content providing apparatus 100 provides the evaluation history (380).

As described above in FIG. 2, the content providing apparatus 100 not only calculates the evaluation score for each turn, but also generates the feedback comment generated based on the first policy decision-making. The generated evaluation score and the feedback comment are matched for each turn and stored in the content providing apparatus 100 as the evaluation history. When the last turn is ended, the content providing apparatus 100 provides the evaluation history including the evaluation score and the feedback comment to the user terminal 200, thereby strengthening the user's administrative capability.

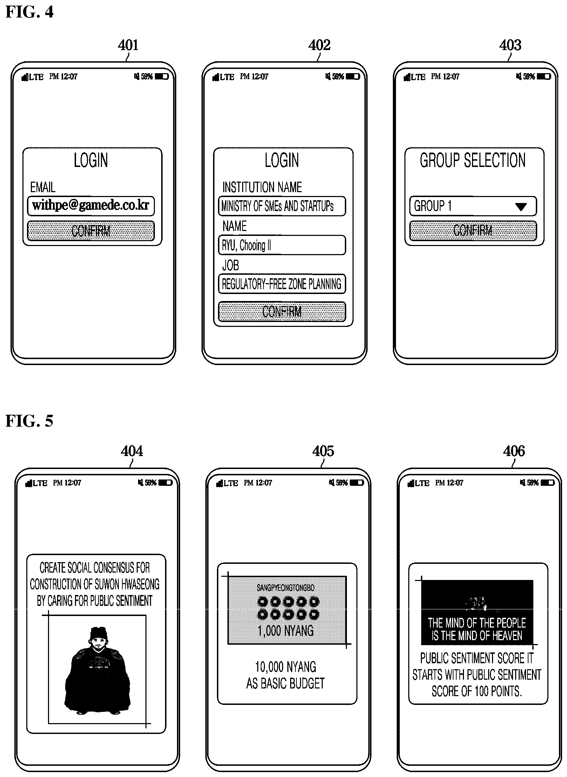

FIGS. 4 to 6 are diagrams for illustrating an example of the administration strategy simulation provided by the content providing apparatus to the user terminal in accordance with still another exemplary embodiment. FIGS. 4 to 6 will be described together below in order to avoid redundant description.

Referring to FIG. 4 first, in order to perform a preliminary preparation necessary for the administration strategy simulation, the setting management unit 110 may set a learning goal of the administration strategy, and generate a budget amount of approximately 10,000 nyang, a period of approximately 24 weeks, and a basic public sentiment score of approximately 100 points corresponding to the learning goal.

Thereafter, the setting management unit 110 provides a QR code including a web address where the simulation is made to progress to the user terminal 200 to the plurality of user terminals 200, and the plurality of users access the content providing apparatus 100 through the user terminal 200.

A screen first output from the already subscribed user terminal 200 may a screen such as 401. The user can log in by inputting his or her e-mail address on a login screen and then inputting a password, etc. through a screen that is subsequently output.

Next, the setting management unit 110 provides a screen such as 402 through the user terminal 200, the user inputs personal information including an affiliated public institution, name, job, etc., and the setting management unit 110 allows participation for each user based on the personal information.

The setting management unit 110 receives group number 1 from the user terminal 200 through a screen such as 403, configures a group 300 with 5 users participating in the administration strategy simulation as group members of group 1, and sets the virtual budget amount, public sentiment score, and deadline for 5 users in the group 1.

Referring to FIG. 5, the simulation execution unit 130 according to an example may make an administration strategy simulation education progress while presenting a policy goal as shown in a screen such as 404. As an example, the administration strategy simulation may provide a UI representing Jeongjo representing the king together with the goal of "creating a social consensus for the construction of Suwon Hwaseong Fortress while caring for the public".

As shown in a screen such as 405, the simulation execution unit 130 may display on the UI that Sangpyeongtongbo of approximately 1,000 nyang is provided among the total of approximately 10,000 nyang, along with the guide that approximately 10,000 nyang is paid as the basic budget. In addition, as shown in a screen such as 406, the simulation execution unit 130 may provide a guide that the public sentiment score of approximately 100 points are given.

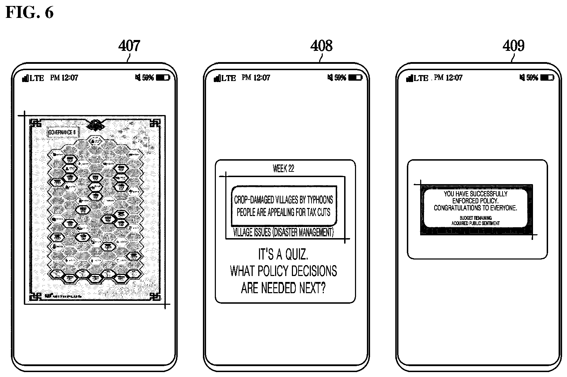

Referring to FIG. 6, the simulation execution unit 130 according to an example may provide a user with a UI for displaying a zone that indicates a starting place and displaying a base space while progressing through each zone for each turn, while displaying a screen such as 407. The user makes progress for one week for each preset turn (e.g., approximately 24 weeks), and may apply and modify an administration strategy corresponding to an issue that occurs in each turn. Specifically, in the administration strategy simulation, there is a preset base space, and a first base (e.g., Seungjeongwon) is the starting point, and it is possible to establish a plan by dividing roles with the group members in advance. A second base (e.g., Gyeongbokgung Palace) is the destination of the administration strategy simulation and is affected by the issue. A third base (e.g., Hyanghoe) is where learning content is provided, and the evaluation score is calculated according to the second policy decision-making, and the budget amount and public sentiment score may be increased or decreased. In addition, the simulation execution unit 130 may provide various events necessary for making the game progress at each base.

The simulation execution unit 130 may display the learning content provided at the third base on a screen such as 408. The learning content is the result inferred through the neural network that learned big data such as the result of policy enforcement of public institution, public opinion, or real issue. The simulation execution unit 130 may display the generated learning content on a screen such as 408 and induce the user's correct answer.

The administration strategy evaluation unit 120 calculates the evaluation score from the user's response input to the user terminal 200, that is, the second policy decision-making, and increases or decreases the budget amount and public sentiment based on the evaluation score.

The simulation practitioner 130 may inform that the administration strategy simulation has ended by displaying a screen of 409 after the last turn is made to progress. In addition, the simulation execution unit 130 outputs the evaluation history in which the evaluation score calculated and the generated feedback comments for each turn are accumulated to the user terminal 200, thereby capable of strengthening the administration capability of the user.

Meanwhile, the examples of the design and learning content illustrated in FIGS. 4 to 6 are only an example of the administration strategy simulation conducted by the content providing apparatus 100, and various modifications may be made thereto.

The content providing apparatus 100 described above may be implemented as a hardware component, a software component, and/or a combination of a hardware component and a software component. For example, the apparatus, method, and components described in the embodiments may be implemented using one or more general purpose computers or special purpose computers, such as, for example, a processor, controller, arithmetic logic unit (ALU), digital signal processor, microcomputer, field programmable gate array (FPGA), programmable logic unit (PLU), or any other device capable of executing and responding to instructions. The processing device may execute an operating system (OS) and one or more software applications running on the operating system. In addition, the processing device may also access, store, manipulate, process, and generate data in response to execution of the software. For the convenience of understanding, although it is sometimes described that one processing device is used, one of ordinary skill in the art will recognize that the processing device may include a plurality of processing elements and/or a plurality of types of processing elements. For example, the processing device may include a plurality of processors or one processor and one controller. Other processing configurations, such as parallel processors, are also possible.

The method according to the embodiment may be implemented in a form of program instructions that can be executed through various computer means and recorded in a computer-readable medium. The computer-readable medium may include program instructions, data files, data structures, etc. alone or in combination. The program instructions recorded on the medium may be specially designed and configured for the embodiment, or may be known and available to those skilled in the art of computer software. Examples of the computer-readable recording medium include hardware devices specially configured to store and execute such program instructions, such as, magnetic media such as hard disks, floppy disks, and magnetic tapes, optical recording media such as CD-ROMs and DVDs, magneto-optical media such as floppy disks, ROMs, RAMs, flash memories, etc. Examples of program instructions include not only machine language codes such as those generated by a compiler, but also high-level language codes that can be executed by a computer using an interpreter or the like. The hardware devices described above may be configured to operate as one or more software modules to perform the operations of the embodiments, and vice versa.

Software may include a computer program, code, instructions, or a combination of one or more thereof, and may configure the processing device to operate as desired, or independently or collectively instruct the processing device to operate. Software and/or data, in order to be interpreted by the processing device or to provide instructions or data to the processing device, may be permanently or temporarily embodied in any type of machine, component, physical device, virtual equipment computer storage medium or device, or a transmitted signal wave. The software may be distributed over networked computer systems and stored or executed in a distributed manner. Software and data may be stored in one or more computer-readable recording media.

Although the embodiments have been described with reference to the limited drawings as described above, those skilled in the art may apply various technical modifications and variations thereto based on the matters described above. For example, even if the described techniques are performed in a different order than the described method, and/or the described components of the system, structure, apparatus, circuit, etc. are coupled or combined in a different form than the described method, or replaced or substituted by other components or equivalents, an appropriate result can be achieved.

Therefore, other implementations, other embodiments, and equivalents to the claims are also within the scope of the following claims.

In the embodiments, by collecting the real issue, public opinion, and result of policy implementation actual public institution that can be collected in various ways and providing learning content generated based on these data, participants can experience difficulties and a degree of difficulty of actual administration implementation experience and internalize capabilities necessary for the realization of administration policy.

In addition, according to a goal-based administration strategy scenario, a learner clearly recognizes an administration strategy goal through mission execution, and the learner can experience the budget execution and policy progress in compliance with the deadline given by the actual administration policy.

In addition, by making learning progress through a group of multiple learners and providing learning content suitable for administrative ranks, it is possible to develop differentiated policy capabilities for policy makers and policy practitioners.

Although the content providing apparatus for simulating administration strategy and the providing method thereof have been described with reference to the specific embodiments, they are not limited thereto. Therefore, it will be readily understood by those skilled in the art that various modifications and changes can be made thereto without departing from the spirit and scope of the present invention defined by the appended claims.

## Claims

1. A content providing apparatus comprising:
a setting management unit configured to assign at least one or more user terminals participating in an administration strategy simulation as a group member, and give a virtual budget amount, a deadline, and a public sentiment to an assigned group;
a data generation unit configured to include a neuron network trained using at least one data of a result of policy enforcement of public institution, public opinion, or a real issue and generate learning content and a first policy decision-making corresponding to the learning content through the trained neuron network;
an administration strategy evaluation unit configured to calculate an evaluation score based on a second policy decision-making input by a user of the user terminal and the first policy decision-making inferred by the data generation unit and increase or decrease the budget amount and the public sentiment score based on the calculated evaluation score; and
a simulation execution unit configured to, in a first turn, provide first learning content to the user terminal, transmit the budget amount and the public sentiment score changed through the administration strategy evaluation unit to the user terminal after receiving the second policy decision-making, and provide second learning content corresponding to a second turn.

2. The apparatus of claim 1, wherein
the data generation unit is configured to collect the result of policy enforcement of public institution, the public opinion, or the real issue, which become a hot topic in real time through the Internet network, and train the neuron network with the data collected as an input value even while the turn is in progress.

3. The apparatus of claim 1, wherein
the simulation execution unit is configured to arrange a plurality of pieces of learning content generated by the data generation unit for each turn based on a preset rule and a learning goal of administration strategy.
